# EUROPEAN PATENT SPECIFICATION

(11) **EP 2 023 567 B1**
(45) Date of publication and mention of the grant of the patent: **16.03.2011**
(21) Application number: 07114047.9
(22) Date of filing: 08.08.2007
(51) Int. Cl.: H04L 29/06

(54) **Managing security rule conflicts**
Verwaltung von Konflikten in Sicherheitsregeln
Gestion des conflits de règles de sécurité

(43) Date of publication of application: 11.02.2009
(73) Proprietor: MITSUBISHI ELECTRIC CORPORATION, Chiyoda-ku Tokyo 100-8310 (JP); Mitsubishi Electric R&D Centre Europe B.V., 1119 NS Schiphol Rijk (NL)
(72) Inventor: Bouzida, Yacine, 35200 Rennes (FR)
(74) Representative: Cabinet Plasseraud

(56) References cited:
- US-A1- 2006 294 577
- E. AL-SHAER, H. HAMED: "Modeling and Management of Firewall Policies" IEEE TRANS. NETW. SERV. MANAGE., [Online] vol. 1-1, April 2004 (2004-04), XP002464039 Retrieved from the Internet: URL:http://www.mnlab.cs.depaul.edu/project s/SPA/files/tnsm04.pdf> [retrieved on 2008-01-10]
- AL-SHAER E ET AL: "Conflict Classification and Analysis of Distributed Firewall Policies" IEEE JOURNAL ON SELECTED AREAS IN COMMUNICATIONS, IEEE SERVICE CENTER, PISCATAWAY, US, vol. 23, no. 10, October 2005 (2005-10), pages 2069-2084, XP011140074 ISSN: 0733-8716
- AL-SHAER E S ET AL: "Discovery of policy anomalies in distributed firewalls" INFOCOM 2004. TWENTY-THIRD ANNUALJOINT CONFERENCE OF THE IEEE COMPUTER AND COMMUNICATIONS SOCIETIES HONG KONG, PR CHINA 7-11 MARCH 2004, PISCATAWAY, NJ, USA,IEEE, vol. 4, 7 March 2004 (2004-03-07), pages 2605-2616, XP010740626 ISBN: 0-7803-8355-9

## Description

### TECHNICAL FIELD

The present invention relates to a conflict management method that can be used for detecting different anomalies present in a set of access control rules. Such access control rules can be used in an electronic device, such as a firewall for filtering incoming and outgoing traffic, in operating systems for managing file access, in attack signature databases for intrusion detection, in email applications for managing rules or in industrial mechanisms. The invention equally relates to such an electronic device and to a computer program arranged to implement the method.

### BACKGROUND OF THE INVENTION

Current security mechanisms implemented in communication systems use a large number of techniques in order to filter packets in access control systems where many rules are specified for this task. Intrusion detection systems also use a set of rules to match different flows captured from the monitored network with the current known attacks that are described in a set of rules. The task of writing a rule; may it be for the access control goal or intrusion detection goal, is not a hard task. However, dealing with a large set of rules and discovering whether there are rules that are never tested or others that are redundant is not an easy task particularly when dealing with numerous rules written by successive administrators.

Security rules should be carefully written and well organized to answer the security policy specification. Since this is not an easy task that could be resolved by an operator, novel and fast automatic methods should be introduced to overcome this problem. Moreover, the administrator should be given exact information about the type of misconfiguration and the set of rules that conducted to such a misconfiguration.

Many current companies, governmental, academia and military agencies use a set of components to secure their information systems. Firewalls are the most used security equipment to filter and police the traffic traversing different zones of trust in an organization. Internet for example is considered as a zone with no trust and all the incoming and outgoing traffic to the Internet should be controlled with appropriate filtering rules to prevent attacks.

Although firewalls provide a powerful solution to filter traffic and control the flows traversing the different zones considered in an organization, their appropriate configuration according to the defined security policy remains a hard task. There are different reasons that make handling correct rules according to the target security policy difficult. First, the different firewalls of an organization may be installed in its different sub-organizations that are located in different locations, countries and continents. Second, hundreds or thousands of rules are specified in the different firewalls that may be written by different administrators along the time. Finally, updating the different rules according to new security policies by adding or removing rules renders the task of the administrator almost impractical. For all of these reasons, efficient techniques should be introduced to help administrators to verify, analyze and correct the different rules that are written.

There are various systems that try to solve the firewall misconfiguration problem. While these systems use different methods for detecting the different anomalies, they share approximately the same problems for detecting these anomalies.

A publication entitled "Discovery of Policy Anomalies in Distributed Firewalls" by Ehab S. Al-Shaer and Hazem H. Hamed, IEEE INFOCOM 2004, discloses a method for detecting anomalies, but this method does not detect all the anomalies that may exist when considering all the rules presented by an operator, because that detection approach is based on comparing the rules two by two.

The following illustrative example with only one conditional attribute dIP (destination IP) can be considered:
*R*₁*:* dIP ∈ [40-90]→ accept;
*R*₂*:* dIP ∈ [80-120]→ deny;
*R*₃: dIP ∈ [50-110]→accept.

In the above rule set dIP denotes destination internet protocol (IP) address. In this case the proposed method does not detect the complete shadowing of rule *R₃* because of the union of rules *R*₁ and *R*₂. A rule set contains a complete shadowing anomaly if there exists at least a rule that never applies because all the packets that this rule matches are already matched by a prior rule or a combination of rules that have higher priority in order.

A publication entitled "Detection and Removal of Firewall Misconfiguration" by F. Cuppens, N. Cuppens-Boulahia, and J. García-Alfaro, IASTED International Conference on Communication, Network and Information Security (CNIS 2005) discloses another solution that solves the above problem, but this method also has many shortcomings. An ambiguous definition of redundancy was introduced. As a matter of fact, if there are two rules that have the same attribute values, then the first one is considered as a redundant rule and so on if there are more than two identical rules. For this reason, the shadowing detection is considered before redundancy to restrict this shortcoming. However, if (1) one rule has higher priority in order than a set of one or more rules with lower priority with the same decision, and (2) all packets that the first rule matches are also matched by the combination of the other rules(s), and (3) the conditional attribute values of the first rule are strictly included in the conditional attribute values of the rules with lower priority, then the first rule, with a higher priority, is detected as redundant. In addition to this, if one rule set is considered and the rules are reordered then some anomalies might not be detected in the second rule set while they are detected in the first one and vice versa. The following rule set is an example that illustrates these two problems:
*R*₁: dIP ∈ [20-90] → accept;
*R*₂*:* dIP ∈ [40-120] → deny;
*R*₃*:* dIP ∈ [10-55] → accept;
*R*₄: dIP ∈ [30-110] → accept.

In this example, rule *R*₁ is detected as a redundant one due to the combination of rules *R*₃ and *R*₄. However, if the order of the rules *R*₁ and *R*₃ is altered as presented in the following, then *R*₁ is not detected as redundant but as shadowed.
*R*₃*:* dIP ∈ [10-55] → accept;
*R*₂*:* dIP ∈ [40-120] → deny;
*R*₁: dIP ∈ [20-90] → accept;
*R*₄: dIP ∈ [30-110] → accept.

This situation is due to the ambiguity of that approach. That approach takes the different algorithms ahead rather than considering a real definition of redundancy. In addition to this, the execution order of the different rules is not kept according to the original rule set.

A scientific publication entitled "Modeling and management of firewall policies", IEEE TRANS. NETW. SERV. MANAGE., vol. 1-1, April 2004 by E. Al-Shaer and H. Hamed, XP-002464039 discloses a set of techniques and algorithms that provide automatic discovery of firewall policy anomalies to reveal rule conflicts and potential problems in legacy firewalls, and anomaly-free policy editing for rule insertion, removal and modification.

A scientific publication entitled "Conflict classification and analysis of distributed firewall policies", IEEE JOURNAL ON SELECTED AREAS IN COMMUNICATIONS, vol. 23, No. 10, October 2005 by E. Al-Shaer et al. discloses a set of techniques and algorithms to automatically discover policy anomalies in centralized and distributed firewalls.

United States patent application publication 2006/0294577 discloses a system, computer-implementable method and computer usable medium for resolving discrepancies between diverse firewall designs.

Thus, there is a need for an improved method for detecting and managing security rule conflicts.

### SUMMARY OF THE INVENTION

According to a first aspect of the invention there is thus proposed a conflict management method as recited in claim 1.

The proposed invention introduces a new method that is able to find all possible misconfigurations of different security rules that are specified by an administrator to filter inbound and outbound traffic traversing the considered filtering equipment. There are many advantages of this mechanism when compared to other solutions. The proposed method is independent of rules reordering, i.e. rules priority. The method finds all possible anomalies; redundancy, shadowing, etc. Different anomalies can also be precisely presented to the administrator. Thus, all rules and their attribute range values that contributed to the anomaly can be precisely shown to the administrator for further investigation. Therefore, the administrator of the network element can be warned about all misconfigurations and it is up to him to choose the best rule set free of errors according to a priori defined policy. It is also possible to a priori tune the method so that the method gives automatically one possible rule set free of errors according to the administrator's choice.

The proposed method has also the advantage of "rules memory keeping". This method not only finds all misconfiguration anomalies and possibilities but also keeps at the same time the original rule set in its data structure as described later on. Furthermore, the method is invariant to updating of the rules. In contrast to other methods that give blindly the final rule set free of their corresponding anomalies, the proposed method keeps the original rule set while finding the different anomalies. The proposed method gives the same result irrespective of the order of the rules and all the anomalies are found while other methods depend on the last rules that are generated and the new rule that is added or omitted.

According to a second aspect of the invention there is further provided a computer program product comprising instructions for implementing the method according to the first aspect, when loaded and run on computer means of an electronic device that is able to manage the detected conflicts.

According to a third aspect of the invention there is provided an electronic device capable of managing conflicts as recited in claim 12.

### BRIEF DESCRIPTION OF THE DRAWINGS

Other features and advantages of the invention will become apparent from the following description of non-limiting exemplary embodiments, with reference to the appended drawings, in which:
- Figures 1a and 1b show a flow chart depicting a conflict detection method in accordance with an embodiment of the invention;
- Figures 2-7 illustrate different steps when creating a conflict tree in accordance with an embodiment of the invention;
- Figure 8 is a conflict tree showing rule anomalies obtained in accordance with an embodiment of the present invention;
- Figure 9 is a conflict tree free of rule anomalies obtained in accordance with an embodiment of the present invention;
- Figure 10 shows a part of another conflict tree containing rule anomalies; and
- Figures 11-12 show each a part of a conflict tree of Figure 10 free of rule anomalies.

### DETAILED DESCRIPTION OF EMBODIMENTS OF THE INVENTION

Some embodiments of the invention will now be described in more detail with reference to the appended drawings. In the following description, the embodiments of the invention are described in the context of a communication system employing internet protocol (IP). However, the present invention is by no means limited to the use of IP.

The present invention may be implemented in a logical or a physical device inside filtering equipment. The only condition for the equipment is that it uses a set of rules that provides the corresponding actions or decisions to be applied when some conditions are satisfied. Examples of these devices are hardware firewalls, software firewalls (netfilter, ipfilter, etc.), intrusion detection/prevention systems (snort, dragon, etc.) that use a set of rules gathered in a signature database. Moreover, this technique may be generalized to other non security equipment such as quality of service (QoS) management tools, routers (routing table management, border gateway protocol aggregation, etc), optical network units (ONUs), gigabit ethernet passive optical network (GePON), optical line terminators (OLTs), email applications for managing rules, etc. The present invention is also useful for the new generation networks. In fact, this invention is recommended to be used for conflict configuration in session border controllers (SBCs) and in application layer gateways (ALGs) that have seen a great interest in the current voice over IP (VoIP) networks.

While the related work done in this field focused only on detecting some anomalies in a set of rules, the present invention applies not only to firewall misconconfigurations but also to intrusion detection rules such as snort's rules, files (or directory) access control in different Operating Systems (OSs) such as Windows, Linux, Unix, industrial mechanisms and automation. In the following detailed description, the present invention is explained in more detail and its different procedures applied to a set of firewall rules since these rules illustrate efficiently the applicability of this invention.

Many current security equipment pieces which are either software or hardware devices, are mainly configured with a set of rules such as those introduced in Table 1. Generally, each rule provides a decision, such as accept, deny, alert, log, etc., according to a set of attribute values. In the case of firewall filtering function, these attributes may be related to the different IP packet header fields. However, this list of attributes is extensible to other features that are either related to application protocols such as the current VoIP protocols including session initiation protocol (SIP). For simplicity, in the following description some IP header fields such as protocol (P) (e.g. transmission control protocol, user datagram protocol, internet control message protocol, etc.), source IP address (sIP), destination IP address (dIP), source port (sP) and destination port (dP) are only considered. The only condition that the different conditional attributes should fulfill is that their possible values belong to a finite set or a finite interval.

In the following, a grammar is provided that is used to describe the different rules where for each rule a set of conditions should be satisfied to accomplish the corresponding decision(s). Global syntax for a single rule can be defined in the following way:
*Rᵢ* → <Conditions>: <Decisions>
   <Conditions> → Condition ∧ <Conditions> / condition
   <Decisions> → Decision <OP> <Decisions>/ Decision
   <OP> → ∧/∨/...

In the syntax, OP denotes operand, ∧ denotes AND operation and ∨ denotes OR operation. The *Condition* terminal may be any condition where an attribute is tested whether it belongs to a set or not. This set may correspond to a single set, an intersection of many sets, a union of different sets and/or any other operation sets. The *Decision* terminal corresponds to any action that an element managing rules, such as a firewall, may apply such as *deny, accept, log,* etc. This set may contain discrete values, such as "tcp", "udp", "a", "b", "left" "right", "up", "down", "1", "2", " 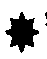 ", "★", "Paris" "London", "read", "write", "execute", etc., and/or continuous values such as intervals [-30; 5000], [20.36; 562[, etc. However, these sets or intervals should be finite.

**Table 1: Filtering rule set example with 5 conditional attributes.**

| **Priority order** | **Protocol (P)** | **Source IP (sIP)** | **Source Port (sP)** | **Destination IP (dIP)** | **Destination Port (dP)** | **Decision** |
|---|---|---|---|---|---|---|
| **1** | any | any | any | **x.x.x.[20 - 90]** | any | accept |
| **2** | any | any | any | **x.x.x.[40 - 120]** | any | deny |
| **3** | any | any | any | **x.x.x.[1 - 55]** | any | accept |
| **4** | any | any | any | **x.x.x.[10- 80]** | any | deny |
| **5** | any | any | any | **x.x.x.[30 - 110]** | any | accept |
| **6** | any | any | any | any | any | deny |

From the global syntax presented above, the filtering rule syntax for the example of Table1 would be:
<Conditions> → <P> ∧ <SIP> ∧ <SP>∧ <DIP> ∧ <DP>
<Decision> → accept / deny.

The notation ∧ means logical AND operation. In Table 1, only five conditional attributes, or attributes in short, are present, namely P, sIP, sP, dIP and dP. In the following description of the embodiments of the present invention only the shadowing anomaly is considered. It is to be noted that other anomalies, even if ambiguous, are all detected by the methods explained below. While currently known conflict detection methods use a complete rule anomaly, the embodiments of the present invention use partial rule misconfiguration definition as explained below.

In the following description S denotes a set of filtering rules comprising a plurality (at least one) of rules *Rᵢ*. Then by definition R presents partial shadowing if and only if there exists at least a part of a rule *Rᵢ* in S that never applies. This is due to the fact that all the packets that may be matched by this rule part are previously matched by at least one part of the previous rules having a higher priority.

The present invention provides a robust and concise method which is able to detect all possible anomalies in an optimum way, i.e. space and time consumptions are minimized. The analysis of many rules with significant anomalies particularly when written by non experimented security administrator is not an easy task. Furthermore, the embodiments of the present invention let the network administrator choose the appropriate combination of rules that is free of anomalies. The decision may be automatic or manual according to the preferences of the administrator.

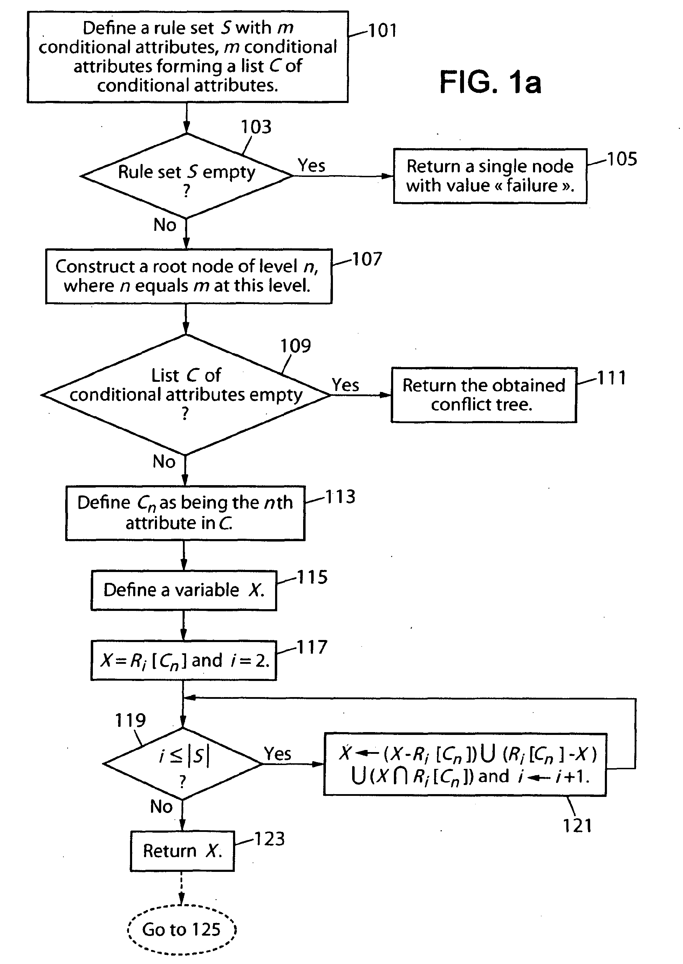

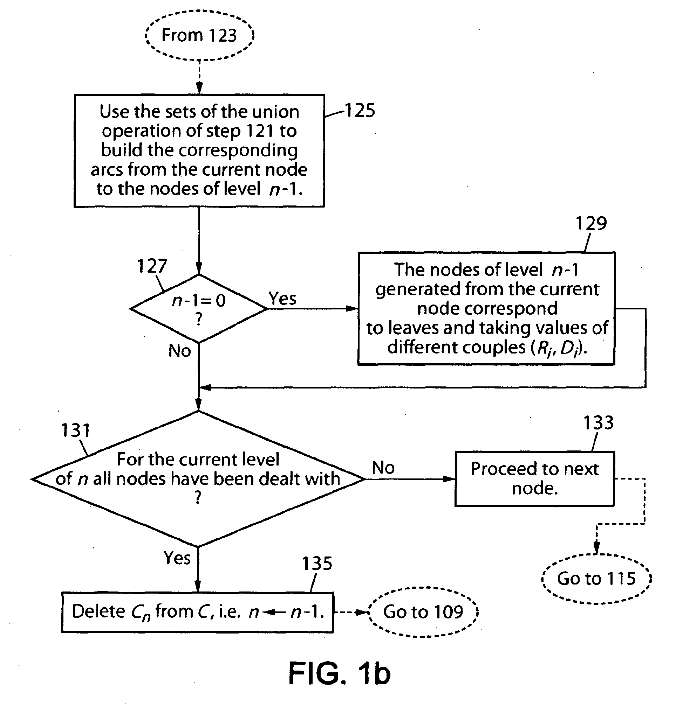

The embodiments of the present invention use a tree that summarizes all conditions and the corresponding decisions. This tree can be called a conflict management tree. The algorithm presented in the flow chart of Figure 1 illustrates an embodiment of the present invention and gives different steps that are followed in order to split and aggregate the initial set of rules into an optimum set. The tree generated from this algorithm contains three components: nodes, arcs and leaves. First, each node corresponds to a conditional attribute, for instance sIP is one conditional attribute in this example. Second, each arc is labeled with a conditional attribute value or a range of values. Finally, leaves correspond to couples, i.e. rule number and its corresponding decision. The different rules may be read by traversing the tree from up to down based on their conditional attribute values and the node values until one leaf is reached. Once a leaf is reached, two cases are possible. There is only one couple present, then the corresponding rule is free of anomalies, according to the different values seen when traversing the tree from the root to the leaf, or there are at least two couples. In this latter case, there is a conflict between the different rules present in the tested leaf.

In the following, the flow chart of Figure 1 is described in more detail. First in step 101 a rule set S is defined, the rule set comprises individual rules *Rᵢ*, where *i* is a positive integer specifying rule number i in the set S. Furthermore, each rule comprises m conditional attributes, where m is a positive integer. Then in step 103 it is checked whether the rule set S is empty. If the rule set is empty, then in step 105 a single node is returned with value failure. Then the procedure is terminated.

On the other hand, if in step 103 it is determined that the rule set is not empty, then a first root node is constructed in step 107. The first root node is a level n node, where n is a variable identifying different node levels and at the root level n equals to m. Each node level corresponds to one conditional attribute. Thus, there are m different levels of nodes and after the last level there are leaves. It is to be noted that each level of nodes may have several parallel nodes. The nodes are further identified with different rules so that the first node is identified with all the rules comprised in the rule set S.

Next in step 109 it is checked whether the list C of conditional attributes is empty. If this is the case, then the obtained conflict tree is returned in step 111. If the list of conditional attributes C is not empty, then the procedure continues in step 113 by defining *Cₙ* as being the *n*^{th} attribute in C. Next in step 115 a variable *X* is defined and in step 117 this variable is defined to take the value of *R*₁[*Cₙ*], i.e. the current conditional attribute value of the first rule. At the same time the index i is set to 2.

Then in step 119 the index *i* is compared to the cardinal value of set S of the current node, also denoted |*S*|. The cardinal value means the number of rules in the current node, which is not necessary the same value as the number of rules in the whole rule set. If *i* is not greater than the cardinal value of S in the current node, then *X* is defined in step 121 to take the value of (*X*-*Rᵢ*[*Cₙ*])∪(*Rᵢ*[*Cₙ*]-*X*)∪(*X*∩*Rᵢ*[*Cₙ*]), i.e. the union of sets (*X*-*Rᵢ*[*Cₙ*]), (*Rᵢ*[*Cₙ*]-*X*) and (*X*∩*Rᵢ*[*Cn*]). Then the index *i* is incremented by one. Once this step is computed, the procedure continues in step 119 by comparing again whether the index *i* is greater than the cardinal value of S of the current node. If this is the case, then in step 123 the current value of *X* is returned. The value *X* is comprised of the sets as defined in step 121. Then in step 125, the sets as described in step 121 are used to build arcs from the current node to the node of level *n*-1 so that these arcs are labeled with these different sets. Thus, there are as many arcs going from the current node to the level *n*-1 node as there are number of sets. The level *n*-1 nodes are further identified with corresponding rules so that each node is identified only by the rules that fulfill the condition set by the corresponding set which labels the arc leading to the corresponding node. It is to be noted that the sets correspond to the values of the conditional attributes or subranges of these values. Thus each node level may have several parallel children nodes. A child node is defined to be a node that is connected to a father node or current node with an arc.

Next in step 127 it is determined whether *n*-1 equals to 0. If this is the case, there are no attribute conditions to test and in step 129 a single leaf is returned for each set as defined in step 121. Each returned leaf takes the values of corresponding couples (*Rᵢ*, *Dᵢ*), where *Rᵢ* corresponds to the remaining rules in the current node and *Dᵢ* corresponds to the corresponding decision(s). Each leaf is identified by a rule or rules that fulfill the conditions of the set labeling the arc leading to the current leaf. If there is no conflict in the current leaf, then only one couple is returned, whereas if there is a conflict, at least two couples are returned.

The procedure then continues in step 131 by determining whether for the current conditional attribute *Cₙ*, or equally for the level *n*, all nodes have been dealt with. This is done by checking all the nodes of the previous level, i.e. level *n*+1, and verifying that all the sets have been dealt with, since there is always a node corresponding to a set. The set was defined in step 121, i.e. sets for obtaining the union. This can equally be expressed as checking that all the arcs from the previous level node(s) has/have been dealt with. If all the nodes have not been dealt with, then in step 133 the next node is considered and then the procedure continues in step 115. This loop continues until all nodes have been dealt with. On the other hand, if in step 131 it is determined that for the current level *n* all the nodes have been dealt with, then the procedure continues in step 135 by deleting the current *Cₙ* from *C*, i.e. *n* takes the value *n*-1. From step 135 the procedure goes directly to step 109.

Next some concrete examples are described to better illustrate the operation of the proposed method. Let us begin by applying the method to a simple example where the rule set S contains only two rules: *R*₁ and *R*₂. *R*₁: P ∈ {tcp} ∧ sIP ∈ [10-55] ∧ sP ∈ any ∧ dIP ∈ [60-80] ∧ dP ∈ {80} → accept; *R*₂: P ∈ {tcp} ∧ sIP ∈ [60-80] ∧ sP ∈ any ∧ dIP ∈ [30-120] ∧ dP ∈ {21,22,80} → deny.

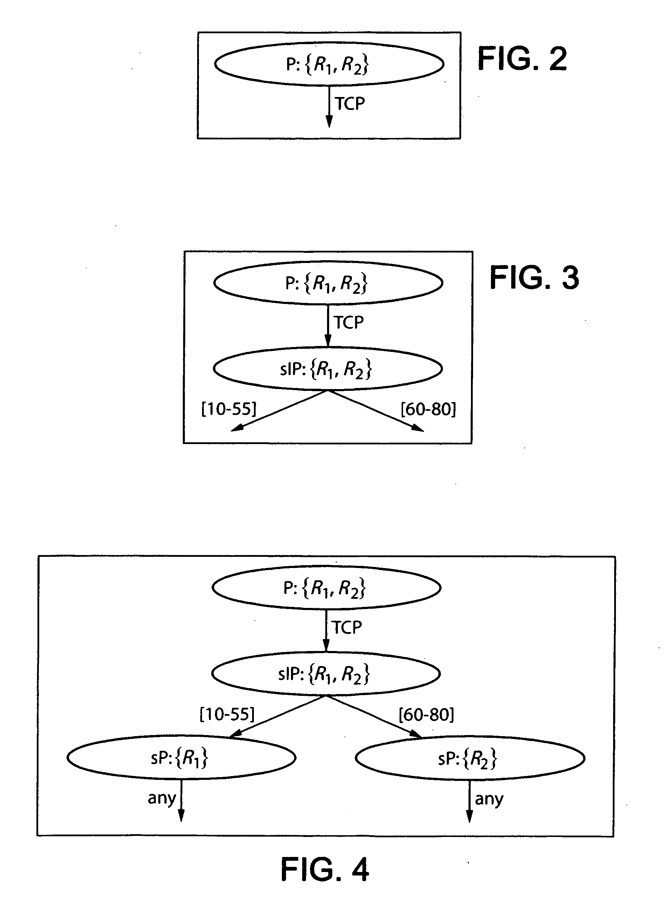

Again the number of conditional attributes is five. In this case the 5^{th} (*n* = 5) conditional attribute is P and by performing steps 117, 119, 121 and 123, only one value, i.e. tcp, is obtained. Steps 117, 119, 121 and 123 are known as a partitioning procedure in the following description. Figure 2 shows the first part of the tree that is obtained after this step has been performed.

The 4^{th} (*n* = 4) conditional attribute is sIP. By applying the partitioning procedure two distinct intervals: [10-55] and [60-80] are obtained, where the intervals [10-55] and [60-80] are sets of the union operation of step 121. Thus, the subtrees as shown in Figure 3 are returned and are attached to the tree as shown in Figure 2.

The 3^{rd} (*n* = 3) conditional attribute is sP. By applying the partitioning procedure, the tree is expanded as shown in Figure 4. Now the tree contains two disjoint branches.

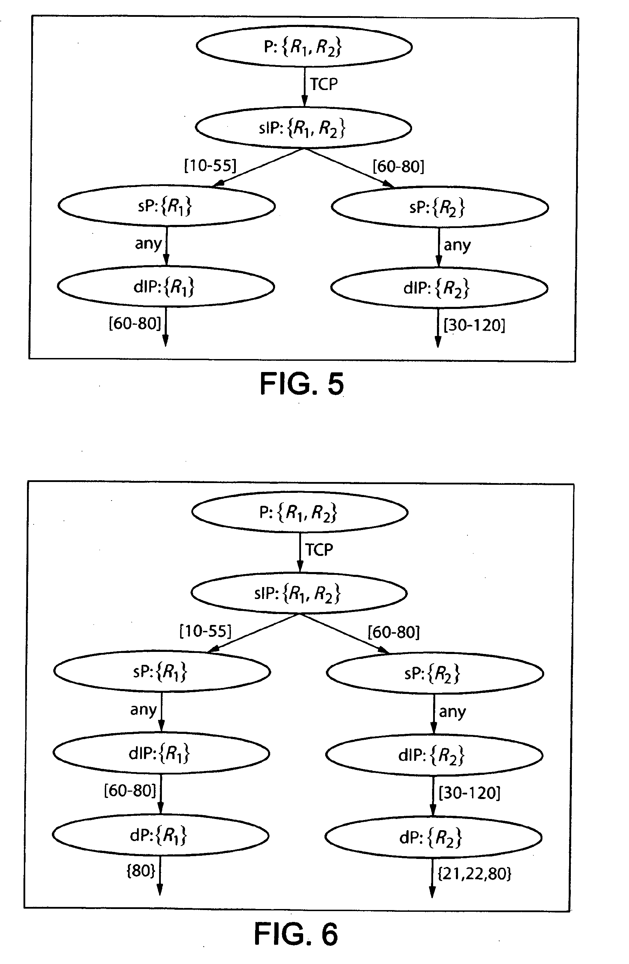

The 2^{nd} (*n* = 2) conditional attribute is dIP. By applying the partitioning procedure the tree is again expanded as shown in Figure 5. However, no further branches are added, only the existing branches are expanded.

The 1^{st} (*n* = 1) conditional attribute is dP. By applying the partitioning procedure to this example the existing branches are again expanded, but no new branches are added. This is shown in Figure 6. Thus now there exist two sP, dIP and dP nodes, and they only contain one arc each.

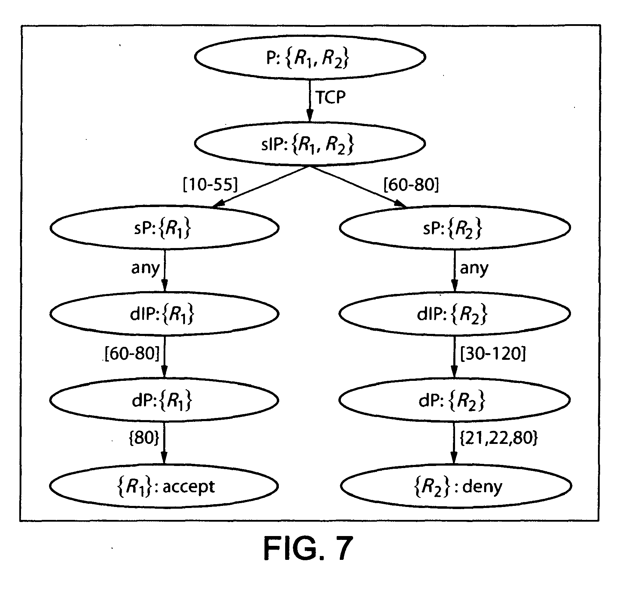

Finally, when *n* = 0 there is no conditional attribute to test. All of the five conditional attributes are tested. Then *C* depicting the set of condition features is empty. Therefore, a single node is returned for each pending arc of Figure 6. Each of them contains the remaining couples, i.e. the rule number(s) and their corresponding decision(s). According to the conflict tree generated as shown in Figure 7, there is only one couple in each leaf. Therefore, there is none partially shadowing anomaly. As a consequence to this result, there is no anomaly and the two rules are independent.

The next example illustrates the execution of the same algorithm over a set of a three-rule set that contains anomalies. The set S is as follows:
*R*₁: P ∈ any ∧ sIP ∈ any ∧ sP ∈ any ∧ dIP ∈ x.x.x.[1-120] ∧ dP ∈ [21-80] → accept;
*R*₂: P ∈ any ∧ sIP ∈ any ∧ sP ∈ any ∧ dIP ∈ x.x.x.[1-60] ∧ dP ∈ [10-25] → deny;
*R*₃: P ∈ any ∧ sIP ∈ any ∧ sP ∈ any ∧ dIP ∈ x.x.x.[31-200] ∧ dP ∈ [21-65535] → deny.

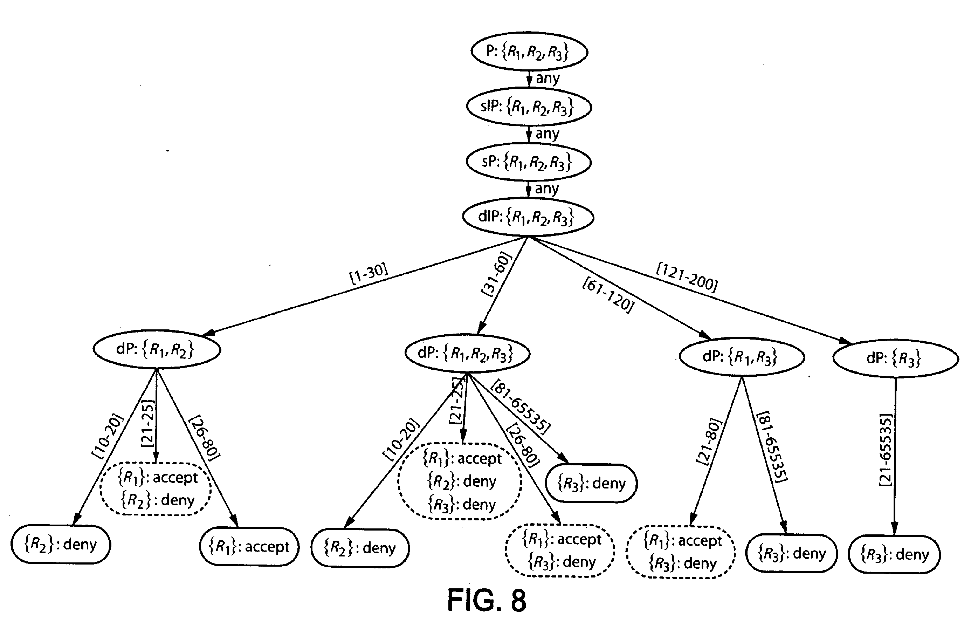

Figure 8 shows the conflict tree generated by applying the algorithm of the flow chart of Figures 1 a and 1 b. To better illustrate how the tree is obtained, a numerical example is explained next. Let us assume *n* = 1, then the conditional attribute currently tested is dP and let us consider the leftmost node of dP, where the node contains rules *R*₁ and *R*₂. This node is obtained by following the path from the root {P: any, sIP: any, sP: any, dIP: [1-130]}, which is the leftmost path from the root of the conflict tree in Figure 8. In this case *R*₁[*Cₙ*] = *R*₁[dP] = [21-80], where *Cₙ* is the currently tested attribute which is in this case dP, i.e. destination port and *R*₂[*Cₙ*] = *R*₂[dP] = [10-25].
Let us continue the application of the partitioning procedure:
*X* ← *R*₁[*Cₙ*] = *R*₁[dP] = [21-80]; *i* = 2.
|*S*| =|{ *R*₁, *R*₂}| = 2.

Then the condition i ≤ 2 is fulfilled. Now *X* ← (*X* - *R*₂[dP]) ∪ (*R*₂[dP] - *X*) ∪ (*X* ∩ *R*₂[dP]) becomes *X* ← ([21 - 80] - [10 - 25]) ∪ ([10 - 25] - [21 - 80]) ∪ ([21 - 80] ∩ [10 - 25]) = [26 - 80] ∪ [10 - 20] ∪ [21 - 25]. It is to be noted that [26 - 80] ∩ [10 - 20] ∩ [21 - 25] = {}, i.e. an empty set.

Next *i* is incremented so that *i* ← *i*+1 = 3. Now *i* = 3 > |*S*| =|{ *R*₁, *R*₂}| = 2. This means that the result *X* is returned corresponding to the three sets, namely [26-80], [10-20] and [21-25]. The three sets is the reason why there are three arcs originating from the node dP: {*R*₁, *R*₂}.

From Figure 8 it can be realized that this three-rule set contains four partial shadowing anomalies that are visually shown by leaves drawn with dashed contour lines. However, if we count the number of rules that are shadowed in each leaf, then Figure 8 shows five shadowing anomalies since one leaf contains three rules making two rules with lower priority shadowed. The first partial shadowing corresponds to the following parts of the two rules *R*₁ and *R*₂:
P ∈ any ∧ sIP ∈ any ∧ sP ∈ any ∧ dIP ∈ x.x.x.[1-30] ∧ dP ∈ [21-25] → {*R*₁: accept, *R*₂: deny}.

If the priority used is the first match, i.e. *R*₁ is the first in order according to the priority then the packets that are matched by both *R*₁ and *R*₂ according to the above generated rule from the conflict tree, as detected by the conflict tree, would always take the decision of *R*₁ (accept) instead of that of *R*₂ (deny) and vice versa. The same partial shadowing anomaly occurs for the following part of the rules *R*₁, *R*₂ and *R*₃:
- 2^{nd} partial shadowing {*R*₁, *R*₂, *R*₃}:
   P ∈ any ∧ sIP ∈ any ∧ sP ∈ any ∧ dIP ∈ x.x.x.[31-60] ∧ dP ∈ [21-25] → {*R*₁: accept, *R*₂: deny, *R*₃: deny};
- 3^{rd} partial shadowing {*R*₁, *R*₃}:
   P ∈ any ∧ sIP ∈ any ∧ sP ∈ any ∧ dIP ∈ x.x.x.[31-60] ∧ dP ∈ [26-80] → {*R*ᵢ: accept, *R*₃: deny};
- 4^{th} partial shadowing {*R*₁, *R*₃}:
   P ∈ any ∧ sIP ∈ any ∧ sP ∈ any ∧ dIP ∈ x.x.x.[61-120] ∧ dP ∈ [21-80] → {*R*₁: accept, *R*₃: deny}.

When partial shadowing anomalies are detected, two different solutions are provided to solve the problem. In accordance with the first solution, the administrator is warned about the different anomalies that are detected by the conflict tree. The administrator can then take appropriate decisions regarding the different anomalies that are detected.

In accordance with the second solution the result is automated by providing a set of rules free of anomalies. This solution involves considering the priority ordering of the rules. Therefore, if a rule *Rᵢ* is first in order because of a higher priority than rule *Rⱼ,* then *Rᵢ* is taken as the rule for the path corresponding to the conflict. Therefore, this solution maintains the same matching order as the matching order of the first rule set provided by the administrator. In addition to this, the different attribute values that never apply are deleted from the first rule set. This solution is considered as an option in addition to the administrator warning. For the above example, the following set is provided as a new set with no anomalies:
*R*₁: P ∈ any ∧ sIP ∈ any ∧ sP ∈ any ∧ dIP ∈ x.x.x.[1-120] ∧ dP ∈ [21-80] → accept;
*R*_{2'}*:* P ∈ any ∧ sIP ∈ any ∧ sP ∈ any ∧ dIP ∈ x.x.x.[1-60] ∧ dP ∈ [10-20] → deny;
*R*_{3'}*:* P ∈ any ∧ sIP ∈ any ∧ sP ∈ any ∧ dIP ∈ x.x.x.[31-120] ∧ dP ∈ [81-65535] → deny;
*R*_{32'}*:* P ∈ any ∧ sIP ∈ any ∧ sP ∈ any ∧ dIP ∈ x.x.x.[121-200] ∧ dP ∈ [21-65535] → deny.

These rules generated from the conflict tree are totally disjoint and are free of anomalies. Since they are disjoint then the result of their execution is the same when changing the order of the different rules. In this example *R*₁ remains unchanged, i.e. it is the original *R*₁. *R*₁ is obtained from the conflict tree in the following way:
*R*₁₁: P ∈ any ∧ sIP ∈ any ∧ sP ∈ any ∧ dIP ∈ x.x.x.[1-30] ∧ dP ∈ [21-25] → accept;
*R*₁₂: P ∈ any ∧ sIP ∈ any ∧ sP ∈ any ∧ dIP ∈ x.x.x.[1-30] ∧ dP ∈ [26-80] → accept;
*R*₁₃: P ∈ any ∧ sIP ∈ any ∧ sP∈any ∧ dIP ∈ x.x.x.[31-60] ∧ dP ∈ [21-25] → accept;
R₁₄: P ∈ any ∧ sIP ∈ any ∧ sP ∈ any ∧ dIP ∈ x.x.x.[31-60] ∧ dP ∈ [26-80] → accept;
*R*₁₅: P ∈ any ∧ sIP ∈ any ∧ sP ∈ any ∧ dIP ∈ x.x.x.[61-120] ∧ dP ∈ [21-80] → accept;

Then this set of rules is grouped into the following set of rules:
*R*₁₍₁₋₂₎: P ∈ any ∧ sIP ∈ any ∧ sP ∈ any ∧ dIP ∈ x.x.x.[1-30] ∧ dP ∈ [21-25] ∪ [26-80] → accept;
*R*₁₍₃₋₄₎: P ∈ any ∧ sIP ∈ any ∧ sP ∈ any ∧ dIP ∈ x.x.x.[31-60] ∧ dP ∈ [21-25] ∪ [26-80] → accept;
*R*₁₅: P ∈ any ∧ sIP ∈ any ∧ sP ∈ any ∧ dIP ∈ x.x.x.[61-120] → dP ∈ [21-80] → accept.

This in turn is grouped into one rule:
*R*₁₍₁₋₅₎: P ∈ any ∧ sIP ∈ any ∧ sP ∈ any ∧ dIP ∈ x.x.x.[1-30] ∪ x.x.x.[31-60] ∪ x.x.x.[61-120] ∧ dP ∈ [21-25] ∪ [26-80] ∪ [21-25] ∪ [26-80] ∪ [21-80] → accept.

This rule is equivalent to the original rule *R*₁:
*R*₁₍₁₋₅₎: P ∈ any ∧ sIP ∈ any ∧ sP ∈ any ∧ dIP ∈ x.x.x.[1-120] ∧ dP ∈[ 21-80] → accept.

The other two rules, *R*₂ and *R*₃, are obtained from the conflict tree in the following way:
*R*₂₁: P ∈ any ∧ sIP ∈ any ∧ sP ∈ any ∧ dIP ∈ x.x.x.[1-30] ∧ dP ∈ [10-20] → deny;
*R*₂₂: P ∈ any ∧ sIP ∈ any ∧ sP ∈ any ∧ dIP ∈ x.x.x.[31-60] ∧ dP ∈ [10-20] → deny;
*R*₃₁: P ∈ any ∧ sIP ∈ any ∧ sP ∈ any ∧ dIP ∈ x.x.x.[31-60] ∧ dP ∈ [81-65535] → deny;
*R*₃₂: P ∈ any ∧ sIP ∈ any ∧ sP ∈ any ∧ dIP ∈ x.x.x.[61-120] ∧ dP ∈ [81-65535] → deny;
*R*₃₃: P ∈ any ∧ sIP ∈ any ∧ sP ∈ any ∧ dIP ∈ x.x.x.[121-200] ∧ dP ∈ [21-65535] → deny.

The above rule set is equivalent to the following one:
*R*₂₍₁₋₂₎: P ∈ any ∧ sIP ∈ any ∧ sP ∈ any ∧ dIP ∈ x.x.x.[1-30] ∪ x.x.x.[31-60] ∧ dP ∈ [10-20] → deny;
*R*₃₍₁₋₂₎: P ∈ any ∧ sIP ∈ any ∧ sP ∈ any ∧ dIP ∈ x.x.x.[31-60] ∪ x.x.x.[61-120] ∧ dP ∈ [81-65535] → deny;
*R*₃₃: P ∈ any ∧ sIP ∈ any ∧ sP ∈ any ∧ dIP ∈ x.x.x.[121-200] ∧ dP ∈ [21-65535] → deny.

This in turn is equivalent to the following set of rules:
*R*_{2'}*:* P ∈ any ∧ sIP ∈ any ∧ sP ∈ any ∧ dIP ∈ x.x.x.[1-60] ∧ dP ∈ [10-20] → deny;
*R*_{31'}*:* P ∈ any ∧ sIP ∈ any ∧ sP ∈ any ∧ dIP ∈ x.x.x.[31-120] ∧ dP ∈ [81-65535] → deny;
*R*_{32'}*:* P ∈ any ∧ sIP ∈ any ∧ sP ∈ any ∧ dIP ∈ x.x.x.[121-200] ∧ dP ∈ [21-65535] → deny.

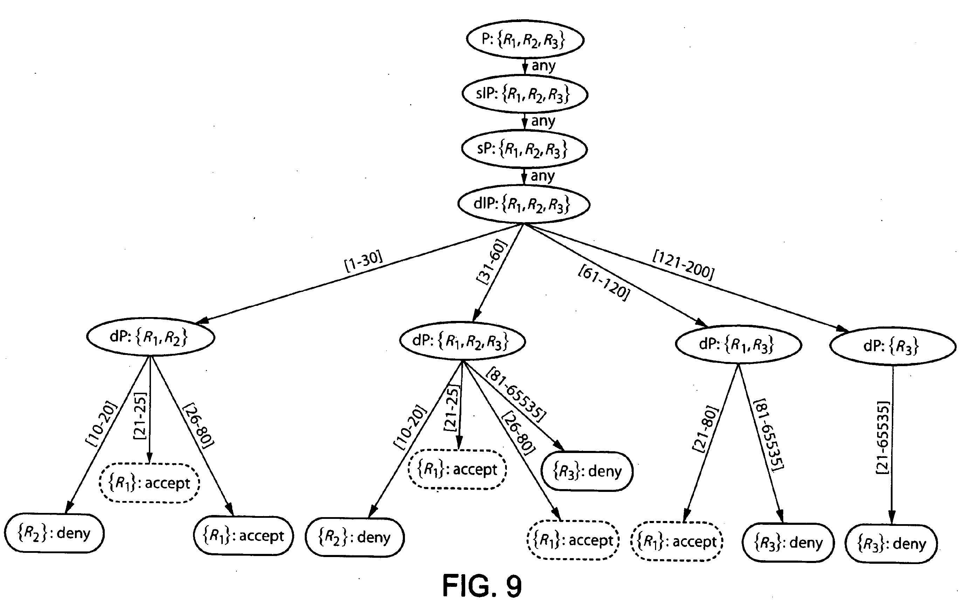

A rule set is free from anomalies if its corresponding conflict tree that is generated by using the conflict tree algorithm as shown in the flow chart of Figures 1a and 1b does not contain leaves with more than one couple, i.e. a rule and its corresponding decision(s). For instance, the tree shown in Figure 9 is free from all anomalies. It is generated from the conflict tree applying the conflict tree algorithm. A direct decision is taken without considering the administrator decision since the conflict is taken in favor of the rules with higher priority.

To illustrate other capabilities of the present invention, let us consider the example presented in Table 1 that contains redundancy anomaly as defined in the publication entitled "Detection and Removal of Firewall Misconfiguration". In that document the redundancy was defined in the following way. Let S be a set of filtering rules. Then S contains a complete redundancy if and only if there exists at least one filtering rule *Rᵢ* in *S*, such that the following conditions hold: (1) *Rᵢ* is not shadowed by any other rule; (2) when removing *Rᵢ* from *S*, the filtering result does not change. To check whether a rule *Rᵢ* is completely redundant, it is sufficient to check each leaf, where this rule is present, the presence of at least a rule with the same decision. For presentation conveniences, only the node level corresponding to the destination IP (dIP) conditional attribute is described in the next example in more detail.

*R*₁ is now detected as a redundant rule while rule *R*₄ is detected as a shadowed one. However, if the order of the rules *R*₁ and *R*₃ is switched and the same priority order is maintained as shown in Table 2, then rule *R*₁ is not detected as a redundant rule. This is due to the ambiguity in the definition of redundancy in that publication. The redundancy of rule *R*₁ is not detected when the order is switched with *R*₃ for algorithmic reasons since the redundancy checking function is looking at the next rules following the current rule under consideration. As a matter of fact, if a rule has a subset of conditional attribute values included in another rule or a combination of at least two other rules with the same decision and a lower priority in order, then the first rule is detected as redundant while the other(s) is (are) kept.

**Table 2: Altering the position of rules R₁ and R₃.**

| **Priority order** | **Protocol (P)** | **Source IP (sIP)** | **Source Port (sP)** | **Destination IP (dIP)** | **Destination Port (dP)** | **Decision** |
|---|---|---|---|---|---|---|
| **3** | any | any | any | **x.x.x.[1 - 55]** | any | accept |
| **2** | any | any | any | **x.x.x.[40 - 120]** | any | deny |
| **1** | any | any | any | **x.x.x.[20-90]** | any | accept |
| **4** | any | any | any | **x.x.x.[10- 80]** | any | deny |
| **5** | any | any | any | **x.x.x.[30 - 110]** | any | accept |

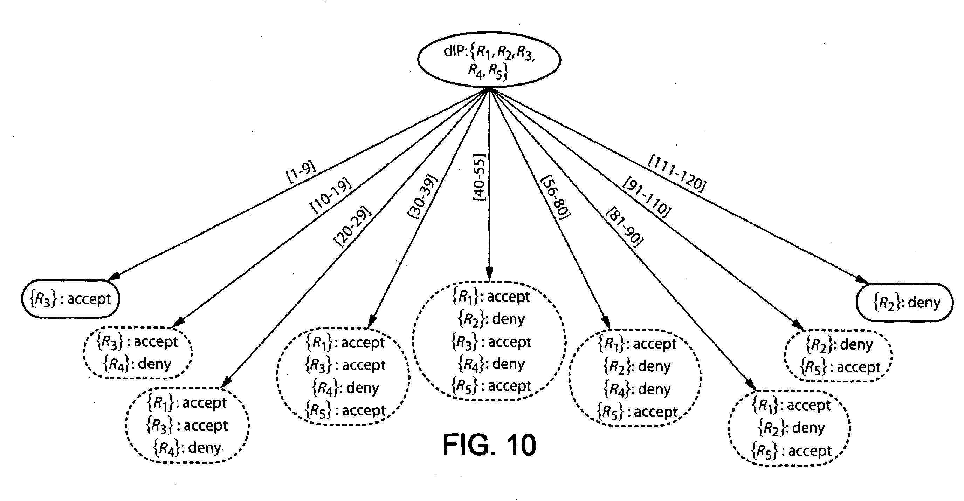

For checking the redundancy as defined above, it is sufficient to look at different leaves in the conflict tree and check for each rule the presence of another rule with a lower priority and with the same decision as that of the tested rule. For instance, according to the conflict tree shown in Figure 10, rule *R*₁ is detected as redundant since it appears that in every leaf there is at least another rule with the same decision and a lower priority. In fact, *R*₃ is present with a lower priority and with the same decision in the first three leaves where *R*₁ shows its presence, and *R*₅ with a lower priority and with the same decision is present in the last three leaves where *R*₁ is present. In the third leaf where *R*₁ is present, the two rules *R*₃ and *R*₅ are both present. To detect a general redundancy despite the order of a rule, as for example *R*₁ as presented in Table 2, it is sufficient to check the presence of another rule with the same decision as the tested rule with a lower or a higher priority.

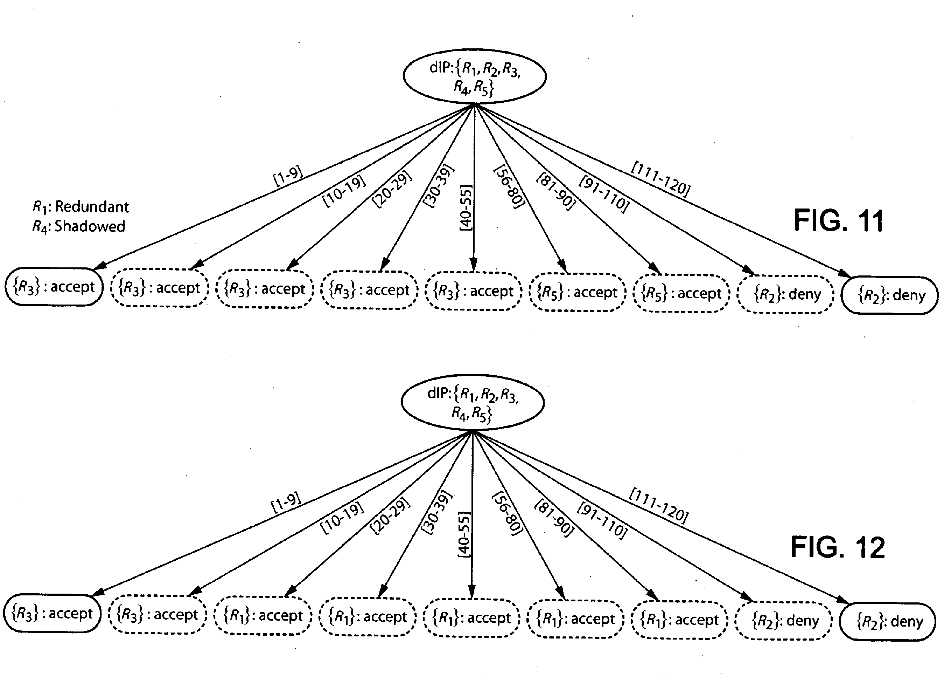

For the detection of shadowing anomaly as defined in the publication entitled "Detection and Removal of Firewall Misconfigurations", it is sufficient to keep only one rule in each leaf after applying the redundancy algorithm. A rule set S contains a complete shadowing anomaly if there exists at least a rule *Rᵢ* in S that never applies because all the packets that this rule matches are already matched by a prior rule or a combination of rules that have higher priority in order. Then *Rᵢ* is called a completely shadowed rule. For the complete shadowing detection of a rule *Rᵢ*, by using the method proposed in the present invention, it is sufficient to check each leaf where this rule is present. So if in all of the leaves where it is present, it is partially shadowed by a finite and not empty set of rules that have a higher priority in order, then this rule is completely shadowed. Therefore, if any rule is not present in any leaf of the new generated conflict tree then it is considered as a shadowing anomaly. One option to do this involves deleting the rules with a lower priority in a leaf as done in Figure 9. Figure 11 presents the result of applying the shadowing algorithm after having applied the redundancy algorithm.

From the conflict tree shown in Figure 11, the following set of rules, which is free of errors, is generated:
*R*_{3'}*:* dIP ∈ x.x.x.[1-55] → accept;
*R*_{2'}*:* dIP ∈ x.x.x.[91-120] → deny;
*R*_{5'}*:* dIP ∈ x.x.x.[56-90] → accept.
This set of rules is obtained by applying the redundancy and shadowing anomalies definitions as introduced in the publication entitled "Detection and Removal of Firewall Misconfiguration".

However, the following anomaly definition can also be used: R presents a partial shadowing if and only if there exists at least a part of a rule *R_{¡}* in S that never applies. If this definition is used on the original conflict tree shown in Figure 10, then the corresponding conflict tree that is free of anomalies is shown in Figure 12. The result is obtained in Figure 12 by simply taking the first rule in each leaf and removing the other rules in the current leaf.

From the conflict tree shown in Figure 12, the following rule set, which is free of errors, is generated. Only the dIP conditional attribute is considered for the matter of illustration:
*R*_{1'}*:* dIP ∈ x.x.x.[20-90] → accept;
*R*_{2'}*:* dIP ∈ x.x.x.[91-120] → deny;
*R*_{3'}*:* dIP ∈ x.x.x.[1-19] → accept.

It is to be noted that the rule set generated from the conflict tree in Figure 11 is different from that generated from the conflict tree of Figure 12. This is due to the definition of redundancy introduced in the publication entitled "Detection and Removal of Firewall Misconfiguration". In fact, for the first rule set the execution order according to the original rule set is not maintained while it is maintained using the option proposed in the present invention. The present invention thus provides a low complexity conflict management method, particularly in the sense of time consumption. The administrator may choose appropriate measures to be taken from the conflict tree that is automatically generated from the algorithm of the flow chart of Figures 1 a and 1 b.

By using the different rules in the leaves of the conflict tree, misconfigurations can be found out such as complete shadowing and complete redundancy. One can define these misconfigurations differently. Despite the definition of a rule misconfiguration, its detection depends directly on the different rules that are present in the different conflict tree leaves. A rule may be completely shadowed and completely redundant at the same time. Many other anomalies may be defined such as generalization, correlation, etc. All of these anomalies may be detected from the conflict tree and particularly from the leaves.

The rules generated from the conflict tree in the above examples are totally disjoint and are free of anomalies. Since they are disjoint then the result of their execution is the same when changing the order of the different rules.

The invention equally relates to a computer program product that is able to implement any of the method steps of the embodiments of the invention when loaded and run on computer means of the network equipment.

The invention equally relates to the network equipment that is arranged to implement the method steps described above. The computer program can be arranged to be run by the network equipment.

While the invention has been illustrated and described in detail in the drawings and foregoing description, such illustration and description are to be considered illustrative or exemplary and not restrictive; the invention is not restricted to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that different features are recited in mutually different dependent claims does not indicate that a combination of these features cannot be advantageously used. Any reference signs in the claims should not be construed as limiting the scope of the invention.

## Claims

1. A method of managing security rule conflicts in an electronic device comprising a set S of security rules Rᵢ, each rule Rᵢ being identified by an index i, and each rule comprising a list of conditional attributes C and at least one corresponding decision, the list of conditional attributes further comprising m individual conditional attributes Cₙ identified by corresponding intervals of values for setting a condition, where n is a variable identifying different conditional attributes in a rule, the method comprises the following steps performed by the electronic device:
- constructing (107) a root node of level n of a conflict management tree, where at the root level n equals to m;
- building (113; 115; 117; 119; 121; 123; 125; 127; 131; 133; 135) the conflict management tree comprising m levels of nodes, the nodes of different levels being connected to each other by arcs labeled by intervals or subintervals of the conditional attributes and the nodes being identified by a rule or rules fulfilling the condition set by the interval or subinterval labeling the arc leading to the corresponding node;
- completing (129) the conflict tree by adding leaves to the arcs originating from the node level n=1, each leaf being identified by a rule or rules that fulfill the condition set by the interval or subinterval labeling the arc leading to the current leaf; and
checking whether there are at least two rules in a same leaf, and this being the case, determining that there is at least one misconfiguration anomaly in the set S of security rules, wherein building the conflict management tree further comprises the steps of:
a) defining (115) a variable X and initializing (117) variable X by the value of R₁(Cₙ) corresponding to the conditional attribute value under consideration of the first rule of the set S of security rules;
b) setting (117) the index i to 2;
c) comparing (119) the index i to the number of rules R under consideration in the current node of level n and in case i is smaller than or equals to the number of rules R under consideration in the current node of level n, then replacing (121) X with the value of (X-Rᵢ[Cu])∪(Rᵢ[Cu]-X)∪(X∩Rᵢ[Cu]), where ∪ denotes mathematical operation union, ∩ denotes mathematical operation intersection, and where (X-Rᵢ[Cₙ]), (Rᵢ[Cₙ]-X) and (X∩Rᵢ[Cₙ]) are sets of the union operation corresponding to the intervals or subintervals of the conditional attributes Cₙ and then incrementing index i by one, and in case the index i is greater than the number of rules R under consideration, then returning (123) value X; and
d) using (125) the sets of X for forming arcs to level n-1 nodes so that each set is used to label only one arc, wherein the level n-1 nodes are identified by the corresponding rules so that each node is identified only by the rules that fulfill the condition set by the corresponding set labeling the arc leading to the corresponding node.

2. The method according to claim 1, wherein the method further comprises the step of:
e) determining (131) whether all nodes of the current level n have been dealt with, and if this is not the case then repeating steps a) to d) until all nodes of the current level n have been dealt with; and
f) decrementing (135) n by 1 and then repeating steps a) to e).

3. The method according to claim 2, wherein the determination in step e comprises checking all the nodes of the level n+1, and verifying that all the arcs originating from the level n+1 have been dealt with.

4. The method according to any of the preceding claims, wherein the method further comprises warning an administrator managing the electronic device about an anomaly and/or providing a set of rules free of conflicts.

5. The method according to claim 4, wherein providing a set of rules free of conflicts comprises considering priority order of the rules and choosing the rule in a leaf with the highest priority, wherein the corresponding attribute values are obtained by starting from the root and taking the attribute values leading to the current leaf.

6. The method according to claim 4, wherein providing a set of rules free of conflicts comprises determining in each leaf whether there are at least a first rule and a second rule with the same decision and if this is the case then choosing from these rules the rule with the highest priority and if the second rule is preceded in all leaves by another rule with the same decision then it is detected as completely redundant, and wherein the corresponding attribute values are obtained by starting from the root and taking the attribute values leading to the current leaf.

7. The method according to any of the preceding claims, wherein the rule set S is applied to firewall rules, intrusion detection, managing file access in operation systems, email applications and /or industrial mechanisms.

8. The method according to any of the preceding claims, wherein the rule set S is kept in its data structure corresponding to the conflict management tree built while applying the method.

9. The method according to any of claims 4-6, wherein the rules in the provided set of rules free of anomalies are disjoint.

10. A computer program product comprising instructions for implementing the steps of a method according to any one of claims 1-9 when loaded and run on computer means of the electronic device.

11. An electronic device capable of managing security rule conflicts in a communication system, the electronic device comprising a set S of security rules Rᵢ, each rule R being identified by an index i, and each rule comprising a list of conditional attributes C and at least one corresponding decision, the list of conditional attributes further comprising m individual conditional attributes Cₙ identified by corresponding intervals of values for setting a condition, where n is a variable identifying different conditional attributes in a rule, the electronic device comprising:
- means for constructing a root node of level n of a conflict management tree, where at the root level n equals to m;
- means for building the conflict management tree comprising m levels of nodes, the nodes of different levels being connected to each other by arcs labeled by intervals or subintervals of the conditional attributes and the nodes being identified by a rule or rules fulfilling the condition set by the interval or subinterval labeling the arc leading to the corresponding node;
- means for completing (129) the conflict management tree by adding leaves to the arcs originating from the node level n=1, each leaf being identified by a rule or rules that fulfill the condition set by the interval or subinterval labeling the arc leading to the current leaf; and
- means for checking whether there are at least two rules in a same leaf, and this being the case, the electronic device is configured to determine that there is at least one misconfiguration anomaly in the set S of security rules,
wherein the means for building the conflict management tree further comprises means for:
a) defining (115) a variable X and initializing (117) variable X by the value of R₁(Cₙ) corresponding to the conditional attribute value under consideration of the first rule of the set S of security rules;
b) setting (117) the index i to 2;
c) comparing (119) the index i to the number of rules R under consideration in the current node of level n and in case i is smaller than or equals to the number of rules R under consideration in the current node of level n, then replacing (121) X with the value of (X-Rᵢ[Cu])∪(Rᵢ[Cu]-X)∪(X∩Rᵢ[Cu]), where ∪ denotes mathematical operation union, ∩ denotes mathematical operation intersection, and where (X-Rᵢ[Cₙ]), (Rᵢ[Cₙ]-X) and (X∩Rᵢ[Cₙ]) are sets of the union operation corresponding to the intervals or subintervals of the conditional attributes Cₙ and then incrementing index i by one, and in case the index i is greater than the number of rules R under consideration, then returning (123) value X; and
d) using (125) the sets of X for forming arcs to level n-1 nodes so that each set is used to label only one arc, wherein the level n-1 nodes are identified by the corresponding rules so that each node is identified only by the rules that fulfill the condition set by the corresponding set labeling the arc leading to the corresponding node.

## Patentansprüche

1. Verfahren zur Verwaltung von Konflikten in Sicherheitsregeln in einer elektronischen Vorrichtung, welche einen Satz S an Sicherheitsregeln Rᵢ umfasst, wobei jede Regel Rᵢ durch einen Index i **gekennzeichnet** ist, und jede Regel eine Liste bedingter Attribute C und mindestens eine entsprechende Entscheidung umfasst, und die Liste der bedingten Attribute weiterhin m individuelle bedingte Attribute Cₙ aufweist, die durch entsprechende Intervalle von Werten für die Herstellung einer Bedingung **gekennzeichnet** sind, wobei n eine Variable ist, die verschiedene bedingte Attribute in einer Regel kennzeichnet, und wobei das Verfahren die folgenden Schritte umfasst, die von der elektronischen Vorrichtung durchgeführt werden:
- Erstellen (107) eines Wurzelknotens der Ebene n eines Konfliktverwaltungsbaumes, bei dem n auf der Wurzelebene m entspricht ;
- Aufbau (113; 115; 117; 119; 121; 123; 125; 127; 131; 133; 135) des Konfliktverwaltungsbaumes, der m Ebenen von Knoten umfasst, wobei die Knoten verschiedener Ebenen durch Bögen miteinander verbunden sind, die durch Intervalle oder Subintervalle der bedingten Attribute markiert sind, und die Knoten durch eine Regel oder Regeln **gekennzeichnet** sind, welche die Bedingung erfüllt bzw. erfüllen, die durch das Intervall oder Subintervall hergestellt ist, welches den Bogen markiert, der zu dem entsprechenden Knoten führt ;
- Vervollständigung (129) des Konfliktbaumes durch Hinzufügen von Blättern zu den Bögen, die aus der Knotenebene n = 1 stammen, wobei jedes Blatt durch eine Regel oder Regeln **gekennzeichnet** ist, die die Bedingung erfüllt bzw. erfüllen, die von dem Intervall oder Subintervall hergestellt ist, welches den Bogen markiert, der zu dem aktuellen Blatt führt; und
Prüfen, ob mindestens zwei Regeln in demselben Blatt vorhanden sind, und wenn dies der Fall ist, Feststellen, dass in dem Satz S der Sicherheitsregeln mindestens eine Fehlkonfigurations-Anomalie vorhanden ist, wobei der Aufbau des Konfliktverwaltungsbaumes weiterhin die folgenden Schritte aufweist :
a) Definition (115) einer Variablen X und Initialisieren (117) der Variablen X durch den Wert von R₁(Cₙ), der dem vorliegenden bedingten Attributwert der ersten Regel des Satzes S an Sicherheitsregeln entspricht ;
b) Einstellen (117) des Indexes i auf 2;
c) Vergleich (119) des Indexes i mit der Anzahl der in der aktuellen Knotenebene n vorliegenden Regeln R, und wenn i kleiner als die oder gleich der Anzahl der vorliegenden Regeln R in dem aktuellen Knoten der Ebene n ist, dann Austausch (121) von X mit dem Wert von (X-Rᵢ[Cn]) ∪ (Rᵢ[Cn]-X) ∪ (X∩Rᵢ[Cn]), wobei ∪ die mathematische Operation der Vereinigung von Mengen, ∩ die mathematische Operation des Durchschnittes von Mengen bezeichnet, und wobei (X-Rᵢ[Cₙ]), (Rᵢ[Cₙ]-X) und (X ∩ Rᵢ [Cn]) Mengen der mathematischen Operation der Vereinigung sind, die den Intervallen oder Subintervallen der bedingten Attribute Cₙ entsprechen, und dann Inkrementieren des Indexes i um eins, und falls der Index i größer ist als die Anzahl der vorliegenden Regeln R, dann Rückkehr (123) zu dem Wert X ; und
d) Verwendung (125) der Mengen von X zur Bildung von Bögen auf Knoten der Ebene n-1, so dass jede Menge zur Markierung nur eines Bogens verwendet wird, wobei die Knoten der Ebene n-1 durch die entsprechenden Regeln **gekennzeichnet** sind, so dass jeder Knoten nur durch die Regeln **gekennzeichnet** ist, die die Bedingung erfüllen, welche durch die entsprechende Menge hergestellt ist, die den Bogen markiert, der zu dem entsprechenden Knoten führt.

2. Verfahren nach Anspruch 1, wobei das Verfahren weiterhin den folgenden Schritt aufweist:
e) Bestimmen (131), ob man sich mit allen Knoten der aktuellen Ebene n befasst hat, und wenn dies nicht der Fall ist, Wiederholen der Schritte a) bis d), bis man sich mit allen Knoten der aktuellen Ebene n befasst hat; und
f) Inkrementieren (135) von n um 1 und Wiederholen der Schritte a) bis e).

3. Verfahren nach Anspruch 2, wobei die Bestimmung in Schritt e) die Kontrolle sämtlicher Knoten der Ebene n+1 und die Überprüfung umfasst, dass man sich mit allen Bögen, die von der Ebene n+1 stammen, befasst hat.

4. Verfahren nach einem der vorhergehenden Ansprüche, wobei das Verfahren weiterhin darin besteht, einen Administrator, der die elektronische Vorrichtung verwaltet, vor einer Anomalie zu warnen bzw. einen Satz von Regeln frei von Konflikten bereitzustellen.

5. Verfahren nach Anspruch 4, wobei das Bereitstellen eines Satzes von Regeln frei von Konflikten darin besteht, die Rangfolge der Regeln zu berücksichtigen und die Regel in einem Blatt mit der höchsten Priorität zu wählen, wobei man die entsprechenden Attributwerte erhält, indem man an der Wurzel beginnt und die Attributswerte nimmt, die zu dem aktuellen Blatt führen.

6. Verfahren nach Anspruch 4, wobei das Bereitstellen eines Satzes von Regeln frei von Konflikten darin besteht, bei jedem Blatt zu bestimmen, ob es mindestens eine erste Regel und eine zweite Regel mit derselben Entscheidung gibt, und wenn dies der Fall ist, Auswählen der Regel mit der höchsten Priorität aus diesen Regeln, und wenn der zweiten Regel in allen Blättern eine andere Regel mit derselben Entscheidung vorhergeht, dann wird sie als vollständig redundant erkannt, und wobei man die entsprechenden Attributwerte erhält, indem man an der Wurzel beginnt und die Attributwerte nimmt, die zu dem aktuellen Blatt führen.

7. Verfahren nach einem der vorhergehenden Ansprüche, wobei der Regelsatz S auf Firewall-Regeln, Einbruchsmeldesysteme, die Verwaltung des Dateizugriffs in Betriebssystemen, e-mail Anwendungen und / oder industrielle Mechanismen angewendet wird.

8. Verfahren nach einem der vorhergehenden Ansprüche, wobei der Regelsatz S in seiner Datenstruktur entsprechend dem Konfliktverwaltungsbaum gehalten wird, der aufgebaut wird, während das Verfahren angewendet wird.

9. Verfahren nach einem der Ansprüche 4 bis 6, wobei die Regeln in dem bereitgestellten Satz von Regeln frei von Anomalien disjunkt sind.

10. Computerprogrammprodukt mit Anweisungen für die Implementierung der Schritte eines Verfahrens gemäß einem der Ansprüche 1 bis 9, wenn es auf einen Computer der elektronischen Vorrichtung geladen wird und darauf ausgeführt wird.

11. Elektronische Vorrichtung, die in einem Kommunikationssystem Konflikte in Sicherheitsregeln verwalten kann, wobei die elektronische Vorrichtung einen Satz S an Sicherheitsregeln Rᵢ umfasst, wobei jede Regel R durch einen Index i **gekennzeichnet** ist, und jede Regel eine Liste bedingter Attribute C und mindestens eine entsprechende Entscheidung umfasst, wobei die Liste der bedingten Attribute weiterhin m individuelle bedingte Attribute Cₙ aufweist, die durch entsprechende Intervalle von Werten für die Herstellung einer Bedingung **gekennzeichnet** sind, wobei n eine Variable ist, die verschiedene bedingte Attribute in einer Regel kennzeichnet, und die elektronische Vorrichtung folgendes aufweist:
- Elemente zum Erstellen eines Wurzelknotens der Ebene n eines Konfliktverwaltungsbaums, bei dem n auf der Wurzelebene m entspricht;
- Elemente zum Aufbau des Konfliktverwaltungsbaumes, der m Ebenen von Knoten umfasst, wobei die Knoten verschiedener Ebenen durch Bögen miteinander verbunden sind, die durch Intervalle oder Subintervalle der bedingten Attribute markiert sind, und die Knoten durch eine Regel oder Regeln **gekennzeichnet** sind, welche die Bedingung erfüllt bzw. erfüllen, die durch das Intervall oder Subintervall hergestellt ist, welches den Bogen markiert, der zu dem entsprechenden Knoten führt;
- Elemente zur Vervollständigung (129) des Konfliktverwaltungsbaumes durch Hinzufügen von Blättern zu den Bögen, die aus der Knotenebene n = 1 stammen, wobei jedes Blatt durch eine Regel oder Regeln **gekennzeichnet** ist, die die Bedingung erfüllt bzw. erfüllen, die von dem Intervall oder Subintervall hergestellt ist, welches den Bogen markiert, der zu dem aktuellen Blatt führt; und
- Elemente zur Überprüfung, ob mindestens zwei Regeln in demselben Blatt vorhanden sind, und wenn dies der Fall ist, wird die elektronische Vorrichtung so konfiguriert, dass sie feststellt, dass in dem Satz S der Sicherheitsregeln mindestens eine Fehlkonfigurations-Anomalie vorhanden ist,
wobei die Elemente zum Aufbau des Konfliktverwaltungsbaumes weiterhin Elemente aufweisen für:
a) die Definition (115) einer Variablen X und das Initialisieren (117) der Variablen X durch den Wert von R₁(Cₙ), der dem vorliegenden bedingten Attributwert der ersten Regel des Satzes S von Sicherheitsregeln entspricht;
b) Einstellen (117) des Indexes i auf 2;
c) Vergleich (119) des Indexes i mit der Anzahl der in der aktuellen Knotenebene n vorliegenden Regeln R, und wenn i kleiner als die oder gleich der Anzahl der vorliegenden Regeln R in dem aktuellen Knoten der Ebene n ist, dann Austausch (121) von X mit dem Wert von (X-Rᵢ[Cn]) ∪ (Rᵢ[Cn]-X) ∪ (X∩Rᵢ[Cn]), wobei ∪ die mathematische Operation der Vereinigung von Mengen, ∩ die mathematische Operation des Durchschnittes von Mengen bezeichnet, und wobei (X-Rᵢ[Cₙ]), (Rᵢ[C_{n]}-X) und (X ∩ Rᵢ [Cn]) Mengen der mathematischen Operation der Vereinigung sind, die den Intervallen oder Subintervallen der bedingten Attribute Cₙ entsprechen, und dann Inkrementieren des Indexes i um eins, und falls der Index i größer ist als die Anzahl der vorliegenden Regeln R, dann Rückkehr (123) zu dem Wert X; und
d) Verwendung (125) der Mengen von X zur Bildung von Bögen auf Knoten der Ebene n-1, so dass jede Menge zur Markierung nur eines Bogens verwendet wird, wobei die Knoten der Ebene n-1 durch die entsprechenden Regeln **gekennzeichnet** sind, so dass jeder Knoten nur durch die Regeln **gekennzeichnet** ist, die die Bedingung erfüllen, welche durch die entsprechende Menge hergestellt ist, die den Bogen markiert, der zu dem entsprechenden Knoten führt.

## Revendications

1. Procédé de gestion des conflits de règles de sécurité dans un dispositif électronique comprenant un ensemble S de règles de sécurité Rᵢ, chaque règle Rᵢ étant identifiée par un indice i, et chaque règle comprenant une liste d'attributs conditionnels C et au moins une décision correspondante, la liste d'attributs conditionnels comprenant en outre m attributs conditionnels individuels Cₙ identifiés par des intervalles correspondants de valeurs pour régler une condition, où n est une variable identifiant des attributs conditionnels différents dans une règle, le procédé comprend les étapes suivantes effectuées par le dispositif électronique :
- construire (107) un noeud racine de niveau n d'une arborescence de gestion de conflits, où au niveau racine n est égal à m ;
- bâtir (113 ; 115 ; 117 ; 119 ; 121 ; 123 ; 125 ; 127 ; 131 ; 133 ; 135) l'arborescence de gestion de conflits comprenant m niveaux de noeuds, les noeuds de différents niveaux étant connectés l'un à l'autre par des arcs libellés par des intervalles ou des sous-intervalles des attributs conditionnels et les noeuds étant identifiés par une règle ou des règles remplissant la condition réglée par l'intervalle ou le sous-intervalle libellant l'arc conduisant au noeud correspondant ;
- compléter (129) l'arborescence de gestion de conflits en ajoutant des feuilles aux arcs provenant du niveau de noeud n=1, chaque feuille étant identifiée par une règle ou des règles qui répondent à la condition réglée par l'intervalle ou le sous-intervalle libellant l'arc conduisant à la feuille en cours ; et
- vérifier s'il y a au moins deux règles dans une même feuille, et si tel est le cas, déterminer qu'il y a au moins une anomalie de configuration dans l'ensemble S de règles de sécurité, dans lequel l'étape consistant à bâtir l'arborescence de gestion de conflits comprend en outre les étapes consistant à :
a) définir (115) une variable X et initialiser (117) la variable X à la valeur de R₁(Cₙ) correspondant à la valeur d'attribut conditionnel en prenant en compte la première règle de l'ensemble S de règles de sécurité ;
b) régler (117) l'indice i à 2 ;
c) comparer (119) l'indice i au nombre de règles R prises en compte dans le noeud en cours de niveau n et dans le cas où i est inférieur ou égal au nombre de règles R prises en compte dans le noeud en cours de niveau n, alors remplacer (121) X par la valeur de (*X - Rᵢ*[*Cₙ*]) ∪ (*Rᵢ[*Cₙ]*-X*) ∪ (X ∩ Rᵢ [*Cₙ*]), où ∪ dénote une union d'opérations mathématiques, ∩dénote une intersection d'opérations mathématiques, et où (*X-R*ᵢ[*Cₙ*]), (*Rᵢ*[*Cₙ*] - X) et (X ∩ *Rᵢ*[*Cₙ*]) sont des ensembles de l'opération d'union correspondant aux intervalles ou aux sous-intervalles des attributs conditionnels Cₙ puis incrémenter l'indice i de 1, et dans le cas où l'indice i est supérieur au nombre de règles R prises en compte, alors retourner (123) la valeur X ; et
d) utiliser (125) les ensembles de X pour former des arcs vers des noeuds de niveau n-1 de sorte que chaque ensemble soit utilisé pour libeller uniquement un arc, dans lequel les noeuds de niveau n-1 sont identifiés par les règles correspondantes de sorte que chaque noeud ne soit identifié que par les règles qui répondent à la condition réglée par l'ensemble correspondant libellant l'arc conduisant au noeud correspondant.

2. Procédé selon la revendication 1, dans lequel le procédé comprend en outre les étapes consistant à :
e) déterminer (131) si tous les noeuds du niveau en cours n ont été traités, et, si tel n'est pas le cas, alors répéter les étapes a) à d) jusqu'à ce que tous les noeuds du niveau en cours n aient été traités ; et
f) décrémenter (135) n de 1 puis répéter les étapes a) à e).

3. Procédé selon la revendication 2, dans lequel la détermination à l'étape e) comprend le contrôle de tous les noeuds du niveau n+1 et la vérification que tous les arcs provenant du niveau n+1 ont été traités.

4. Procédé selon l'une quelconque des revendications précédentes, dans lequel le procédé comprend en outre l'étape consistant à avertir un administrateur gérant le dispositif électronique de la présence d'une anomalie et/ou fournir un ensemble de règles sans conflit.

5. Procédé selon la revendication 4, dans lequel l'étape consistant à fournir un ensemble de règles sans conflit comprend la prise en compte d'un ordre de priorité des règles et le choix de la règle dans une feuille avec la plus grande priorité, dans lequel les valeurs d'attributs correspondantes sont obtenues en partant de la racine et en prenant les valeurs d'attributs conduisant à la feuille en cours.

6. Procédé selon la revendication 4, dans lequel l'étape consistant à fournir un ensemble de règles sans conflit comprend la détermination dans chaque feuille s'il y a au moins une première règle et une deuxième règle avec la même décision et, si tel est le cas, alors le choix parmi ces règles de la règle avec la plus grande priorité et, si la deuxième règle est précédée dans toutes les feuilles par une autre règle avec la même décision, elle est alors détectée comme étant complètement redondante, et dans lequel les valeurs d'attributs correspondantes sont obtenues en partant de la racine et en prenant les valeurs d'attributs conduisant à la feuille en cours.

7. Procédé selon l'une quelconque des revendications précédentes, dans lequel l'ensemble de règles S est appliqué à des règles de pare-feu, à la détection d'intrusion, à la gestion de l'accès aux fichiers dans des systèmes d'exploitation, à des applications d'e-mail, et/ou à des mécanismes industriels.

8. Procédé selon l'une quelconque des revendications précédentes, dans lequel l'ensemble de règles S est maintenu dans sa structure de données correspondant à l'arborescence de gestion de conflits bâtie en appliquant le procédé.

9. Procédé selon l'une quelconque des revendications 4 à 6, dans lequel les règles dans l'ensemble fourni de règles sans anomalie sont disjointes.

10. Produit de programme informatique comprenant des instructions pour mettre en oeuvre les étapes d'un procédé selon l'une quelconque des revendications 1 à 9 lorsqu'il est chargé et exécuté sur un moyen informatique du dispositif électronique.

11. Dispositif électronique capable de gérer des conflits de règles de sécurité dans un système de communication, le dispositif électronique comprenant un ensemble S de règles de sécurité Rᵢ, chaque règle Rᵢ étant identifiée par un indice i, et chaque règle comprenant une liste d'attributs conditionnels C et au moins une décision correspondante, la liste d'attributs conditionnels comprenant en outre m attributs conditionnels individuels Cₙ identifiés par des intervalles correspondants de valeurs pour régler une condition, où n est une variable identifiant des attributs conditionnels différents dans une règle, le dispositif électronique comprenant :
- un moyen pour construire un noeud racine de niveau n d'une arborescence de gestion de conflits, où au niveau racine n est égal à m ;
- un moyen pour bâtir l'arborescence de gestion de conflits comprenant m niveaux de noeuds, les noeuds de différents niveaux étant connectés l'un à l'autre par des arcs libellés par des intervalles ou des sous-intervalles des attributs conditionnels et les noeuds étant identifiés par une règle ou des règles remplissant la condition réglée par l'intervalle ou le sous-intervalle libellant l'arc conduisant au noeud correspondant ;
- un moyen pour compléter (129) l'arborescence de gestion de conflits en ajoutant des feuilles aux arcs provenant du niveau de noeud n=1, chaque feuille étant identifiée par une règle ou des règles qui répondent à la condition réglée par l'intervalle ou le sous-intervalle libellant l'arc conduisant à la feuille en cours ; et
- un moyen pour vérifier s'il y a au moins deux règles dans une même feuille, et si tel est le cas, le dispositif électronique est configuré pour déterminer qu'il y a au moins une anomalie de configuration dans l'ensemble S de règles de sécurité,
dans lequel le moyen pour bâtir l'arborescence de gestion de conflits comprend en outre des moyens pour :
a) définir (115) une variable X et initialiser (117) la variable X à la valeur de R₁(Cₙ) correspondant à la valeur d'attribut conditionnel en prenant en compte la première règle de l'ensemble S de règles de sécurité ;
b) régler (117) l'indice i à 2 ;
c) comparer (119) l'indice i au nombre de règles R prises en compte dans le noeud en cours de niveau n et dans le cas où i est inférieur ou égal au nombre de règles R prises en compte dans le noeud en cours de niveau n, alors remplacer (121) X par la valeur de (*X*- *Rᵢ*[*Cₙ*]) ∪ (*Rᵢ*[Cₙ]-*X*) ∪ (*X* ∩ *Rᵢ*[*Cₙ*]), où ∪ dénote une union d'opérations mathématiques, ∩dénote une intersection d'opérations mathématiques, et où (*X*-*Rᵢ*[*Cₙ*]), (*Rᵢ*[*Cₙ*]- X) et (*X* ∩ *Rᵢ*[*Cₙ*]) sont des ensembles de l'opération d'union correspondant aux intervalles ou aux sous-intervalles des attributs conditionnels Cₙ puis incrémenter l'indice i de 1, et dans le cas où l'indice i est supérieur au nombre de règles R prises en compte, alors retourner (123) la valeur X ; et
d) utiliser (125) les ensembles de X pour former des arcs vers des noeuds de niveau n-1 de sorte que chaque ensemble soit utilisé pour libeller uniquement un arc, dans lequel les noeuds de niveau n-1 sont identifiés par les règles correspondantes de sorte que chaque noeud ne soit identifié que par les règles qui répondent à la condition réglée par l'ensemble correspondant libellant l'arc conduisant au noeud correspondant.
